# EUROPÄISCHE PATENTANMELDUNG

(11) **EP 3 985 424 A1**
(43) Veröffentlichungstag der Anmeldung: **20.04.2022**
(21) Anmeldenummer: 20201734.9
(22) Anmeldetag: 14.10.2020
(51) Int. Cl.: G02B 21/24

(54) **HOCHAUFLÖSENDES MIKROSKOP MIT EINEM GEHÄUSE UND VERWENDUNG EINES GEHÄUSES ZUM ABDECKEN VON AN EINEM TRÄGER MONTIERTEN OPTISCHEN ELEMENTEN**

(71) Anmelder: Abberior Instruments GmbH, 37077 Göttingen (DE)
(72) Erfinder: Kastrup, Lars, 37073 Göttingen (DE)
(74) Vertreter: REHBERG HÜPPE + PARTNER

(57) **Zusammenfassung**

Bei einem hochauflösenden Mikroskop (1) mit einem Träger (2), mit mehreren an dem Träger (2) in definierter räumlicher Anordnung montierten strahlführenden und strahlformenden optischen Elementen und mit einem die an dem Träger (2) montierten optischen Elemente abdeckenden Gehäuse (9), weist das Gehäuse (9) ein Gehäusepaneel (23-25) auf, das zwei parallel zueinander verlaufenden Decklagen (31, 32) und eine mit den beiden Decklagen (31, 32) stoffschlüssig verbundene und gasgefüllte Kammern umfassende Kernlage (33) umfasst.

## Beschreibung

### TECHNISCHES GEBIET DER ERFINDUNG

Die Erfindung bezieht sich auf ein hochauflösendes Mikroskop mit einem Träger, mit mehreren an dem Träger in definierter räumlicher Anordnung montierten strahlführenden und strahlformenden optischen Elementen und mit einem die an dem Träger montierten optischen Elemente abdeckenden Gehäuse, wobei das Gehäuse ein Gehäusepaneel umfasst. Weiterhin bezieht sich die Erfindung auf die Verwendung eines Gehäuses mit einem Gehäusepaneel zum Abdecken von an einem Träger in definierter räumlicher Anordnung montierten strahlführenden und strahlformenden optischen Elementen eines hochauflösenden Mikroskops.

Mit dem Begriff "hochauflösendes Mikroskop" wird hier insbesondere auf Mikroskope Bezug genommen, mit denen bei der Abbildung einer interessierenden Struktur einer Probe eine räumliche Auflösung im Bereich der Beugungsgrenze und besser erreicht wird. Konkret kann es sich bei dem hochauflösenden Mikroskop um ein Laserscanningmikroskop, ein konfokales Mikroskop, ein STED-Mikroskop, irgendein anderes RESOLFT-Mikroskop, ein MINFLUX-Mikroskop oder ein Lokalisationsmikroskop, wie beispielsweise ein GSDIM-Mikroskop, handeln.

### STAND DER TECHNIK

Je größer die mit einem Mikroskop zu erreichende räumliche Auflösung beim Abbilden einer interessierenden Struktur einer Probe ist, desto stabiler muss die Probe gegenüber dem Mikroskop positioniert, d. h. in Ruhe gehalten werden. Jegliche unkontrollierten Bewegungen der Probe gegenüber dem Mikroskop führen zu Bewegungsunschärfen, die die räumliche Auflösung des Mikroskops erheblich verringern. Dies gilt insbesondere für solche Bewegungen der Probe gegenüber dem Mikroskop, die beim Abbilden der Probe nicht zeitlich aufgelöst und dann korrigiert werden können und die insbesondere mit dem Auftreten von Schwingungen verbunden sind.

Um eine Probe gegenüber einem Mikroskop, mit dem eine interessierende Struktur der Probe abgebildet wird, in Ruhe zu halten, werden vielfach massive und hochsteife Strukturen verwendet, an denen ein Probenhalter für die Probe einerseits und die weiteren Bestandteile des Mikroskops andererseits montiert werden. Derartige massive und hochsteife Strukturen sind jedoch nicht nur schwer, so dass sie zu einem extremen Transportgewicht des jeweiligen Mikroskops führen, sondern sie benötigen auch viel Platz und sie sind vor allem kostspielig.

### AUFGABE DER ERFINDUNG

Der Erfindung liegt die Aufgabe zugrunde, eine technische Maßnahme aufzuzeigen, mit deren Hilfe hochauflösende Mikroskope leichter und kostengünstiger hergestellt werden können.

### LÖSUNG

Die Aufgabe wird erfindungsgemäß durch ein hochauflösendes Mikroskop mit den Merkmalen des unabhängigen Patentanspruchs 1 und die Verwendung eines Gehäuses mit den Merkmalen des unabhängigen Patentanspruchs 2 gelöst. Die abhängigen Patentansprüche 3 bis 15 betreffen bevorzugte Ausführungsformen des hochauflösenden Mikroskops und der Verwendung des Gehäuses.

### BESCHREIBUNG DER ERFINDUNG

Bei einem erfindungsgemäßen hochauflösenden Mikroskop mit einem Träger, mit mehreren an dem Träger in definierter räumlicher Anordnung montierten strahlführenden und strahlformenden optischen Elementen und mit einem die an dem Träger montierten optischen Elemente abdeckenden Gehäuse umfasst das Gehäuse ein Gehäusepaneel mit zwei parallel zueinander verlaufenden Decklagen und einer mit den beiden Decklagen stoffschlüssig verbundenen und gasgefüllte Kammern umfassenden Kernlage.

Bei einer erfindungsgemäßen Verwendung wird ein Gehäuse mit einem Gehäusepaneel, das zwei parallel zueinander verlaufende Decklagen und eine mit den beiden Decklagen stoffschlüssig verbundene und gasgefüllte Kammer umfassende Kernlagen aufweist, zum Abdecken von an einem Träger in definierter räumlicher Anordnung montierten strahlführenden und strahlformenden optischen Elementen eines hochauflösenden Mikroskops verwendet.

Sowohl bei dem erfindungsgemäßen Mikroskop als auch bei der erfindungsgemäßen Verwendung kann das Gehäuse, eventuell zusammen mit dem Träger, die an dem Träger montierten optischen Elemente bis auf notwendige Strahlein- und -ausgänge vollständig oder nur unvollständig umschließen. Die im Folgenden erläuterten Funktionen des Gehäuses werden oftmals bereits bei unvollständig umschlossenen optischen Elementen erreicht. Um diese Funktionen unbedingt sicherzustellen, kann das Gehäuse aber auch grundsätzlich so ausgebildet werden, dass es, eventuell zusammen mit dem Träger, die an dem Träger montierten optischen Elemente bis auf die notwendigen Strahlein- und -ausgänge vollständig umschließt.

### WEITERER STAND DER TECHNIK

Paneele mit zwei parallel zueinander verlaufenden Decklagen und einer mit den beiden Decklagen stoffschlüssig verbundenen und gasgefüllte Kammern umfassende Kernlage sind in verschiedenen Ausführungsformen grundsätzlich bekannt. Hierzu zählen Paneele mit metallischen Decklagen und mit Kernlagen aus gewelltem Metallblech, aus orthogonal zu den Decklagen verlaufenden Waben, welche aus verschiedensten Materialien einschließlich Metall und Kunststoff ausgebildet sein können, sowie aus geschäumten Kunststoffen. Derartige Paneele werden auf verschiedenen technischen Gebieten eingesetzt, zum Beispiel bei Schienenfahrzeugen, Schiffen, Bussen, Gebäudefassaden, im Innenausbau und im allgemeinen Maschinenbau. Im Maschinenbau ist es konkret bekannt, derartige Paneele für schalldämmende Kabinen von Bearbeitungszentren zu verwenden, in denen metallische Werkstücke spanabnehmend bearbeitet werden.

### WEITERE BESCHREIBUNG DER ERFINDUNG

Sowohl das erfindungsgemäße hochauflösende Mikroskop als auch die erfindungsgemäße Verwendung basieren auf der Erkenntnis, dass eine wesentliche Quelle potentieller Relativbewegungen einer Probe mit einem Probenhalter gegenüber weiteren Bestandteilen eines hochauflösenden Mikroskops darauf zurückzuführen sind, dass ein Gehäusepaneel eines Gehäuses des Mikroskops zu Schwingungen, insbesondere resonanten Schwingungen, angeregt wird. Dabei können die Schwingungen bereits durch Luftschall angeregt werden, wie er von Lüftern oder leise gesprochenen Worten in demselben Raum ausgeht, in welchem sich das Mikroskop befindet.

Um zu verhindern, dass Relativbewegungen zwischen Probe und Mikroskop durch ein schwingendes Gehäusepaneel hervorgerufen werden, hätte man den üblichen Weg beschreiten können, tragende Strukturen des Mikroskops, insbesondere den Träger für die strahlführenden und strahlformenden optischen Elemente des Mikroskops, massiv und hochsteif auszubilden. Weiterhin hätte man auch das den Träger und die daran montierten optischen Elemente abdeckende Gehäuse mit dem potentiell schwingenden Gehäusepaneel insgesamt massiv und hochsteif ausbilden können. Beides hätte jedoch nicht zur Lösung der erfindungsgemäßen Aufgabe geführt.

Die Erfinder haben einen anderen Weg eingeschlagen und das Gehäuse mit einem Gehäusepaneel ausgestattet, das zwei parallel zueinander verlaufende Decklagen und eine mit den beiden Decklagen stoffschlüssig verbundene und gasgefüllte Kammern umfassende Kernlage aufweist. Derartige Paneele sind zwar zur Verwendung auf anderen technischen Gebieten grundsätzlich bekannt, nicht aber im Mikroskopbau und nicht zu dem Zweck, die Anregung minimaler Relativbewegungen im Nanometerbereich durch Luftschall zu unterbinden, der nach normalen Maßstäben bereits als sehr leise einzustufen ist. Konkret geht es um Luftschall unterhalb von 40 dB oder auch unterhalb von 25 dB oder gar unterhalb von 20 dB.

Durch die Ausbildung des Gehäusepaneels als Sandwichplatte mit zwei parallel zueinander verlaufenden Decklagen und einer mit den beiden Decklagen stoffschlüssig verbundenen und gasgefüllte Kammern umfassenden Kernlage wird das Gehäusepaneel ohne signifikante Erhöhung seiner Masse so ausgesteift, dass es durch Luftschall nicht zu Schwingungen angeregt wird, die zu Relativbewegungen zwischen einer zu untersuchenden Probe und dem Mikroskops führen könnten. Außerdem kann weder Luftschall noch können Luftströmungen, die in der Umgebung des Mikroskops auftreten können, die von dem Gehäuse abgedeckten, an dem Träger montierten optischen Elemente erreichen. Hierdurch wird verhindert, dass der Luftschall oder die Luftströmung diese optischen Elemente zu Schwingungen anregen kann.

Zudem schützt das Gehäuse aufgrund des mehrlagigen und gasgefüllte Kammern umfassenden erfindungsgemäßen Aufbaus seines Gehäusepaneel die auf dem Träger montierten optischen Elemente auch gut vor thermischen Einflüssen von außen.

In umgekehrter Richtung, das heißt von innen nach außen, schützt das Gehäuse aufgrund des mehrlagigen erfindungsgemäßen Aufbaus seines Gehäusepaneels die Umgebung des Gehäuses vor hochenergetischer Strahlung, insbesondere Laserstrahlung, die von den optischen Elementen aus dem eigentlichen Strahlengang des Mikroskops gestreut oder im Extremfall mit voller Energie ausgelenkt werden kann. Um diesen Schutz besonders gut zu gewährleisten, ist es bevorzugt, wenn das gesamte Gehäuse und damit auch das Gehäusepaneel, insbesondere seine den optischen Elementen zugekehrte innere Decklage, laserfest ist und das gesamte Gehäuse und damit auch das Gehäusepaneel nicht oder zumindest nur schwer entflammbar ist. Die Laserfestigkeit bezieht sich auf die maximale Intensität und die maximale Zeitdauer, mit der hochenergetische Strahlung bei dem jeweiligen Mikroskop potentiell auf die innere Deckschicht auftrifft. Um diese Laserfestigkeit zu gewährleisten, kann die innere Deckschicht gezielt dicker als die den optischen Elementen abgekehrte äußere Deckschicht ausgebildet sein. Alternativ oder zusätzlich zu einer grundsätzlichen Laserfestigkeit kann das Gehäusepaneel mit einem Sensor zum Überwachen seiner Integrität ausgerüstet sein. Beispielsweise kann der Sensor eine elektrische Leitfähigkeit in der Haupterstreckungsebene des Gehäusepaneels erfassen, die bei einer Beschädigung seiner inneren Deckschicht signifikant absinkt.

Vielfach kann die vorliegende Erfindung schon dadurch erfolgreich umgesetzt werden, dass ein vorhandenes Gehäusepaneel als zu Schwingungen neigend identifiziert und durch ein erfindungsgemäß aufgebautes Gehäusepaneel ersetzt wird. Es können aber auch von vornherein alle potentiell zu Schwingungen neigenden Gehäusepaneele eines Gehäuses erfindungsgemäß ausgebildet werden.

Auch die folgenden Erläuterungen betreffen sowohl bevorzugte Ausführungsführungen des erfindungsgemäßen hochauflösenden Mikroskops als auch der erfindungsgemäßen Verwendung.

Der Träger des Mikroskops, an dem die strahlführenden und strahlformenden optischen Elemente angeordnet sind, kann insbesondere ortsfest gegenüber einem Mikroskopstativ angeordnet sein, das einen Probenhalter für die jeweilige Probe umfasst. Aufgrund des erfindungsgemäß ausgebildeten Gehäusepaneels besteht keine Gefahr, dass dieses zu Schwingungen angeregt wird, die aufgrund der ortsfesten Anordnung des Trägers gegenüber dem Mikroskopstativ zu Relativbewegungen zwischen dem Probenhalter und dem Strahlengang des Mikroskops führen könnten. Dies gilt unabhängig davon, ob der Träger direkt an dem Mikroskopstativ montiert ist oder auch das Mikroskopstativ auf dem zum Beispiel als optische Bank oder optischer Tisch ausgebildeten Träger montiert ist.

Die Kernlage des erfindungsgemäß ausgebildeten Gehäusepaneels kann eine Dicke in einem Bereich von 2 bis 20 mm aufweisen. Vorzugsweise liegt diese Dicke im Bereich von 4 bis 10 mm, also bei etwa 7 mm. Die gasgefüllten Kammern können einen Anteil von 50 % bis 99 % eines Volumens der Kernlage ausmachen. Vorzugsweise beträgt dieser Anteil zwischen 80 % und 98 %, d. h. die gasgefüllten Kammern machen den weit überwiegenden Anteil des Volumens der Kernlage aus.

Mindestens eine, vorzugsweise beide Decklagen sind geschlossen ausgebildet, d. h. ohne Durchbrechungen, vielleicht mit Ausnahme von durch das gesamte Gehäusepaneel hindurchreichenden Befestigungsöffnungen zum Durchtritt von Befestigungsschrauben oder dergleichen. Eine typische Dicke der Decklagen liegt im Bereich von 0,2 bis 2 mm. Vorzugsweise beträgt sie zwischen 0,5 und 1,0 mm. Diese Angaben zur Dicke der Decklagen gelten insbesondere dann, wenn die mindestens eine, vorzugsweise beide der Decklagen eine Grundstruktur aus einem metallischen Werkstoff, d. h. ein Metallblech aufweisen. Dieses Metallblech kann insbesondere auf der Außenseite des Gehäusepaneels beschichtet sein. Vorzugsweise ist der metallische Werkstoff ein Leichtmetall, wie insbesondere Aluminium oder eine Aluminiumlegierung. In diesem Fall kann die Decklage, insbesondere an der Außenseite des Gehäusepaneels, eloxiert sein.

Grundsätzlich können die Decklagen auf beliebige Weise stoffschlüssig an die Kernlage angebunden sein, d. h. auch völlig starr durch Punktverschweißen oder dergleichen. In einer bevorzugten Ausführungsform sind die Decklagen jedoch über einen dauerelastischen oder dauerzähen Klebstoff an die Kernlage angebunden, so dass eine viskoelastische Dämpfung für jegliche auftretende Schwingungen des Gehäusepaneels erreicht wird. Alternativ oder zusätzlich kann eine solche viskoelastische Dämpfung auch eine durchgängige Zwischenlage der Kernlage aus einem dauerelastischen oder dauerzähen Kunststoff erreicht werden. Geeignet sind dauerelastische oder dauerzähe Klebstoffe bzw. Werkstoffe mit einer Härte von nicht mehr als 90 Shore A. Mehr bevorzugt ist eine Härte von nicht mehr als 75 Shore A und am meisten bevorzugt eine Härte von nicht mehr als 60 ShoreA.

Die Kernlage des erfindungsgemäß ausgebildeten Gehäusepaneels kann als zwischen den Decklagen mäanderndes Metallblech, beispielsweise als wellenförmig zwischen den Decklagen verlaufendes Metallblech aufweisen. Die Kernlage kann alternativ oder zusätzlich einen offenporigen oder geschlossenporigen Schaum aufweisen, dessen Poren die gasgefüllten Kammern bereitstellen. Bei dem Schaum kann es sich insbesondere um einen Schaum aus aufgeschäumtem Kunststoff oder mineralischem Material handeln. Alternativ oder zusätzlich kann die Kernlage einen Wabenkern mit längs oder quer zu den Decklagen verlaufenden Waben aufweisen. Der Wabenkern kann aus Metall oder Kunststoff, grundsätzlich aber auch aus Papier oder einem Holzwerkstoff ausgebildet sein. Auch andere Ausführungen der Kernlage, beispielsweise aus stoffschlüssig miteinander verbundenen, beispielsweise versinterten, Kugeln oder Hohlkugeln, sind möglich. Wie schon erläutert wurde, ist es aber bevorzugt, wenn das Gehäusepaneel zumindest schwer entflammbar ist. Daher besteht seine Kernlage vorzugsweise aus nicht oder zumindest nur schwer entflammbaren Materialien.

Konkret kann das erfindungsgemäß ausgebildete Gehäusepaneel eine freie Öffnung eines Rahmens des Gehäuses verschließen. Dieser Rahmen kann als formsteife Grundstruktur des Gehäuses vorgesehen sein. In einer bevorzugten Ausführungsform weist der Rahmen miteinander verschraubte oder vernietete Leichtmetallprofilstreben auf. Der Rahmen kann auch insgesamt aus solchen Leichtmetallprofilstreben ausgebildet sein und durch mehrere erfindungsgemäß ausgebildete Gehäusepaneele oder durch erfindungsgemäß und anderweitig ausgebildete Gehäusepaneele zu dem vollständigen Gehäuse ergänzt sein.

Die von dem erfindungsgemäß ausgebildeten Gehäusepaneel verschlossene freie Öffnung des Rahmens des Gehäuses kann eine Länge zwischen 10 cm und 100 cm aufweisen. Häufig beträgt diese Länge der freien Öffnung zwischen 20 cm und 70 cm. Eine Breite der freien Öffnung beträgt typischerweise zwischen 5 cm und 60 cm und häufig zwischen 10 cm und 45 cm. Die freie Öffnung, die im Betrieb des Mikroskops von dem Gehäusepaneel verschlossen wird, ermöglicht bei entferntem Gehäusepaneel einen Zugang zu den darunter oder dahinter montierten optischen Elementen, um diese beispielsweise zu kontrollieren und/oder zu justieren. Vorzugsweise ist das erfindungsgemäß ausgebildete Gehäusepaneel daher lösbar an dem Rahmen befestigt. Konkret kann es dazu in den Rahmen eingeschoben und/oder mit dem Rahmen verschraubt sein.

Vorzugsweise ist dem lösbar an dem Rahmen befestigten Gehäusepaneel ein Lagesensor zugeordnet, der nur dann ein Sicherheitssignal ausgibt, wenn das Gehäusepaneel die freie Öffnung des Rahmens tatsächlich verschließt. Der Betrieb des Mikroskops und insbesondere das Einschalten hochenergetischer Lichtquellen des Mikroskops kann dann davon abhängig sein, dass das Sicherheitssignal vorliegt. So wird verhindert, dass das Mikroskop ohne ordnungsgemäße Abdeckung seiner optischen Elemente durch das Gehäuse betrieben wird und hochenergetische Strahlung aus dem Gehäuse in die Umgebung des Mikroskops gelangen kann.

Wie bereits angedeutet wurde, können neben dem erfindungsgemäß ausgebildeten Gehäusepaneel auch noch weitere erfindungsgemäß ausgebildete Gehäusepaneele, vorzugsweise mindestens vier weitere erfindungsgemäße Gehäusepaneele an dem Rahmen befestigt sein. Daneben können grundsätzlich auch anderweitig ausgebildete Gehäusepaneele an dem Rahmen befestigt sein.

Das Gehäuse zur Abdeckung der an dem Träger montierten optischen Elemente kann selbst an dem Träger abgestützt werden. Dazu kann konkret der Rahmen des Gehäuses an dem Träger montiert werden.

Die an dem Träger montierten und von dem Gehäuse abgedeckten optischen Elemente des hochauflösenden Mikroskops können insbesondere die Folgenden umfassen, wobei diese Aufzählung keinesfalls abschließend ist: Strahlteiler, Strahlscanner, Linsen, Linsengruppen, Phasenplatten, wellenlängenselektive Filter, Spatial Light Modulatoren (SLM), akustooptische Modulatoren (AOM), Vollspiegel, dichroitische Spiegel, deformierbare Spiegel, CMOS- und CCD-Kameras. Auch Lichtdetektoren können auf dem Träger montiert und dort von dem Gehäuse abgedeckt werden. Ebenso wie Laser zur Bereitstellung von Licht können aber diese Lichtdetektoren auch räumlich getrennt angeordnet und über flexible Lichtleiter mit den auf dem Träger montierten optischen Elementen verbunden werden. Dies gilt insbesondere dann, wenn die Lichtdetektoren und Laser aktiv gekühlt werden müssen und mit dieser Kühlung eine zumindest potentielle Anregung von Schwingungen verbunden sein kann.

Wie schon eingangs festgestellt, kann das hochauflösende Mikroskop insbesondere ein Laserscanningmikroskop, ein konfokales Mikroskop, ein STED-Mikroskop oder ein anderes RESOLFT-Mikroskop, ein MINFLUX-Mikroskop oder ein Lokalisationsmikroskop, wie beispielsweise ein GSDIM-Mikroskop sein. Je höher die räumliche Auflösung ist, die mit dem jeweiligen hochauflösenden Mikroskop angestrebt wird, desto wichtiger ist es, Relativbewegungen zwischen der jeweiligen Probe und dem Mikroskop zu vermeiden.

Vorteilhafte Weiterbildungen der Erfindung ergeben sich aus den Patentansprüchen, der Beschreibung und den Zeichnungen.

Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Hinsichtlich des Offenbarungsgehalts - nicht des Schutzbereichs - der ursprünglichen Anmeldungsunterlagen und des Patents gilt Folgendes: Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen, was aber nicht für die unabhängigen Patentansprüche des erteilten Patents gilt.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Träger oder einem Paneel die Rede ist, ist dies so zu verstehen, dass genau ein Träger oder ein Paneel, zwei Träger oder zwei Paneele oder mehr Träger oder mehr Paneele vorhanden sind. Die in den Patentansprüchen angeführten Merkmale können durch weitere Merkmale ergänzt werden oder die einzigen Merkmale sein, die das jeweilige Mikroskop oder die jeweilige Verwendung aufweist.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: ist eine schematische Darstellung eines erfindungsgemäßen hochauflösenden Mikroskops und illustriert zugleich eine erfindungsgemäße Verwendung.
- **Fig. 2**: ist eine perspektivische Ansicht einer konkreten Ausführungsform eines Gehäuses des erfindungsgemäßen Mikroskops gemäß Fig. 1; und
- **Fig. 3**: ist eine perspektivische Explosionszeichnung eines Gehäusepaneel des Gehäuses gemäß Fig. 2.

### FIGURENBESCHREIBUNG

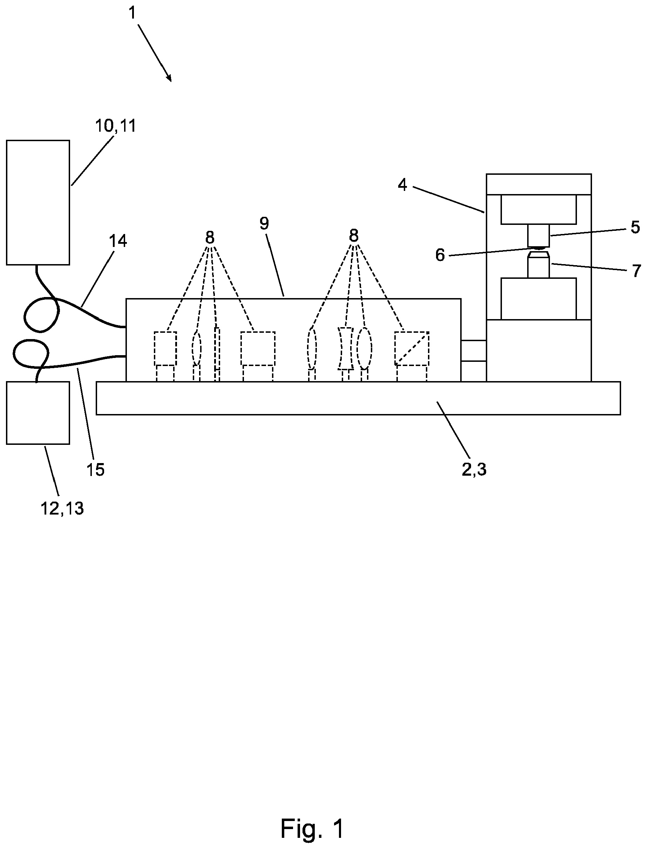

Das in **Fig. 1** gezeigte erfindungsgemäße hochauflösende Mikroskop 1 weist einen Träger 2 auf, der hier als optischer Tisch 3 angedeutet ist. Auf dem Träger 2 ist ein Mikroskopstativ 4 montiert. Das Mikroskopstativ 4 umfasst einen Probenhalter 5 für eine Probe 6, mit dem die Probe 6 gegenüber einem Objektiv 7 und damit gegenüber dem Strahlengang des Mikroskops 1 positioniert wird. In diesem Strahlengang des Objektivs 7 sind verschiedene optische Elemente 8 angeordnet, die wie das Mikroskopstativ 4 auf dem Träger 2 montiert sind und die mit einem Gehäuse 9 abgedeckt sind. Nicht auf dem Träger 2 montiert sind hingegen eine Lichtquelle 10 in Form eines oder mehrerer Laser 11 und hier auch eine Detektionseinrichtung 12 in Form eines oder mehrerer Lichtsensoren 13. Die Lichtquelle 10 und die Detektionseinrichtung 12 sind über flexible Lichtleiter 14, 15 mit dem optischen Aufbau des Mikroskops 1 auf dem Träger 2 verbunden. Das Gehäuse 9 schützt die optischen Elemente 8 auf den Träger 2 vor Beschädigung und Verschmutzung. Es verhindert das Eintreten von Licht aus der Umgebung in den optischen Aufbau. Es verhindert thermische Einflüsse von außen auf den optischen Aufbau; und es verhindert das Auftreffen von Luftschall aus der Umgebung auf die optischen Elemente 8. Um dabei nicht selbst von dem Luftschall zu Schwingungen angeregt zu werden, die sich in Form von Relativbewegungen der Probe 6 gegenüber dem Strahlengang des Mikroskops 1 auswirken, ist das Gehäuse 9 in besonderer Form ausgebildet.

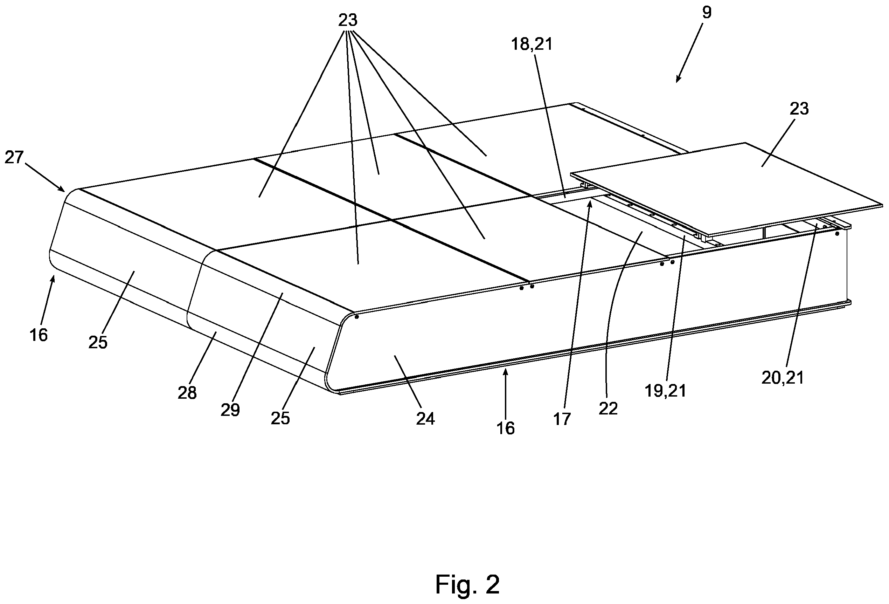

**Fig. 2** zeigt eine konkrete Ausführungsform des Gehäuses 9 in separater Darstellung. Das Gehäuse 9 kann an seiner Unterseite 16 offen sein bzw. mit seiner Unterseite 16 auf dem Träger 2 gemäß Fig. 1 montiert werden. Das Gehäuse 9 weist einen Rahmen 17 auf. Der Rahmen 17 besteht aus miteinander verschraubten Streben 18 bis 20. Diese Streben sind sämtlich Leichtmetallprofilstreben 21. Konkret kann es sich um Strangpressprofile handeln. Der Rahmen 17 begrenzt freie Öffnungen 22, die jeweils mit einem Gehäusepaneel 23, 24 verschlossen sind. Die Gehäusepaneele 23 bis 25 sind in den Rahmen 17 eingeschoben bzw. damit verschraubt. Die Sichtflächen des Gehäuses 9, bis auf Kanten 26, 27 an einer Schmalseite des Gehäuses, die durch gefräste Kantenprofile 28, 29 gebildet werden, werden von den Gehäusepaneelen 23 bis 25 gebildet.

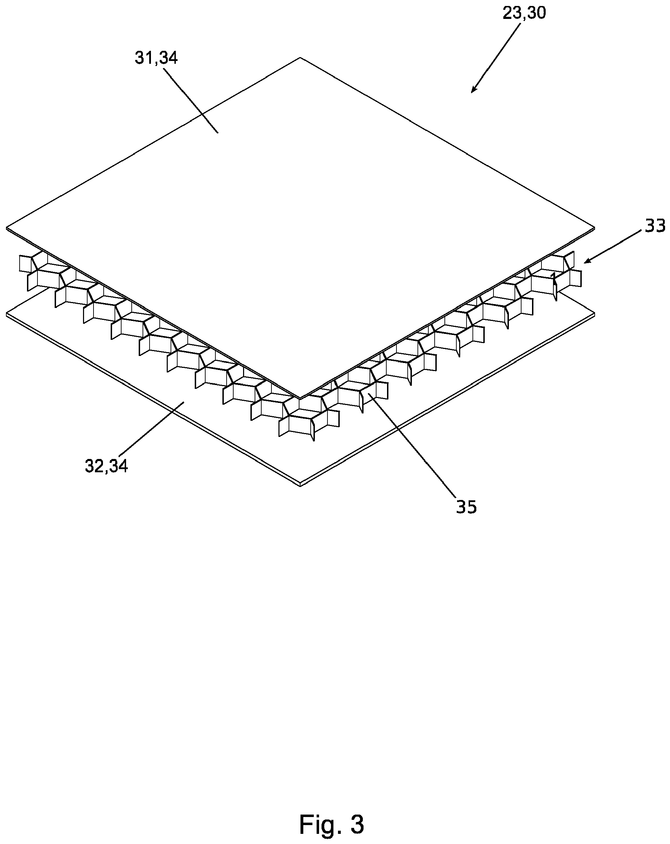

Wie die Explosionszeichnung gemäß Fig. 3 anhand eines der Gehäusepaneele 23 zeigt, sind die Gehäusepaneele als Sandwichpaneele 30 mit zwei Decklagen 31 und 32 und einer dazwischenliegenden Kernlage 33 aufgebaut. Dabei sind die Decklagen 31 und 32 bei dem zusammengesetzten Gehäusepaneel 23 stoffschlüssig mit der Kernlage 33 verbunden, insbesondere durch einen dauerelastischen oder dauerzähen Klebstoff, um eine viskoelastische Dämpfung für etwaige Schwingungen des Gehäusepaneel 23 bereitzustellen. Derartige Schwingungen sind durch den dreilagigen Aufbau und die resultierende hohe Formsteifigkeit bei vergleichsweise geringer Masse des Gehäusepaneels 23 jedoch kaum zu erwarten. Konkret handelt es sich bei den Decklagen 31 hier um eloxierte Aluminiumbleche 34 und bei der Kernlage um einen Wabenkern 35, ebenfalls aus Aluminium.

### BEZUGSZEICHENLISTE

- 1: Mikroskop
- 2: Träger
- 3: optischer Tisch
- 4: Mikroskopstativ
- 5: Probenhalter
- 6: Probe
- 7: Objektiv
- 8: optisches Element
- 9: Gehäuse
- 10: Lichtquelle
- 11: Laser
- 12: Detektionseinrichtung
- 13: Lichtsensor
- 14: Lichtleiter
- 15: Lichtleiter
- 16: Unterseite
- 17: Rahmen
- 18: Strebe
- 19: Strebe
- 20: Strebe
- 21: Leichtmetallprofilstrebe
- 22: Öffnung
- 23: Gehäusepaneel
- 24: Gehäusepaneel
- 25: Gehäusepaneel
- 26: Kante
- 27: Kante
- 28: Kantenprofil
- 29: Kantenprofil
- 30: Sandwichplatte
- 31: Decklage
- 32: Decklage
- 33: Kernlage
- 34: Aluminiumblech
- 35: Wabenkern

## Patentansprüche

1. Hochauflösendes Mikroskop (1) mit
- einem Träger (2),
- mehreren an dem Träger (2) in definierter räumlicher Anordnung montierten strahlführenden und strahlformenden optischen Elementen (8) und
- einem die an dem Träger (2) montierten optischen Elemente (8) abdeckenden Gehäuse (9),
- wobei das Gehäuse (9) ein Gehäusepaneel (23-25) umfasst,
**dadurch gekennzeichnet,**
- **dass** das Gehäusepaneel (23-25) zwei parallel zueinander verlaufenden Decklagen (31, 32) und eine mit den beiden Decklagen (31, 32) stoffschlüssig verbundene und gasgefüllte Kammern umfassende Kernlage (33) aufweist.

2. Verwendung eines Gehäuses (9) mit einem Gehäusepaneel (23-25) zum Abdecken von an einem Träger (2) in definierter räumlicher Anordnung montierten strahlführenden und strahlformenden optischen Elementen (8) eines hochauflösenden Mikroskops (1), **dadurch gekennzeichnet, dass** das Gehäusepaneel (23-25) zwei parallel zueinander verlaufende Decklagen (31, 32) und eine mit den beiden Decklagen (31, 32) stoffschlüssig verbundene und gasgefüllte Kammern umfassende Kernlage (33) aufweist.

3. Mikroskop (1) nach Anspruch 1 oder Verwendung nach Anspruch 2, **dadurch gekennzeichnet, dass** der Träger (2) ortsfest gegenüber einem Mikroskopstativ (4) angeordnet ist, das einen Probenhalter (5) umfasst, wobei vorzugsweise der Träger (2) an dem Mikroskopstativ (4) montiert ist oder das Mikroskopstativ (4) auf dem als optische Bank oder optischer Tisch (3) ausgebildeten Träger (2) montiert ist.

4. Mikroskop (1) oder Verwendung nach einem der vorhergehenden Ansprüche, **dadurch gekennzeichnet, dass** die Kernlage (33) eine Dicke im Bereich von 2 mm bis 20 mm, vorzugsweise im Bereich von 4 mm bis 10 mm aufweist und dass die gasgefüllten Kammern einen Anteil von 50 % bis 99 %, vorzugsweise einen Anteil von 80 % bis 98 % eines Volumens der Kernlage (33) ausmachen.

5. Mikroskop (1) oder Verwendung nach einem der vorhergehenden Ansprüche, **dadurch gekennzeichnet, dass** mindestens eine, vorzugsweise beide der beiden Decklagen (31, 32) geschlossen ausgebildet sind und/oder mindestens eine, vorzugsweise beide der beiden Decklagen (31, 32) eine Dicke von 0,2 bis 2 mm, vorzugsweise von 0,5 bis 1,0 mm aufweisen.

6. Mikroskop (1) oder Verwendung nach einem der vorhergehenden Ansprüche, **dadurch gekennzeichnet, dass** mindestens eine, vorzugsweise beide der beiden Decklagen (31, 32) eine Grundstruktur aus einem metallischen Werkstoff aufweisen, wobei zumindest die innere der beiden Decklagen (32) laserfest ausgebildet ist.

7. Mikroskop (1) oder Verwendung nach einem der vorhergehenden Ansprüche, **dadurch gekennzeichnet, dass** die Decklagen (31, 32) über einen dauerelastischen oder dauerzähen Klebstoff an die Kernlage (33) angebunden sind und/oder dass zumindest eine durchgängige Zwischenlage der Kernlage (33) aus einem dauerelastischen oder dauerzähen Werkstoff ausgebildet ist, wobei der dauerelastische oder dauerzähe Klebstoff und/oder der dauerelastische oder dauerzähe Werkstoff vorzugsweise eine Härte von nicht mehr als 90 Shore A und mehr bevorzugt von nicht mehr als 75 Shore A und am meisten bevorzugt von nicht mehr als 60 Shore A aufweist.

8. Mikroskop (1) oder Verwendung nach einem der vorhergehenden Ansprüche, **dadurch gekennzeichnet, dass** die Kernlage (33) ein zwischen den Decklagen (31, 32) mäanderndes Metallblech und/oder einen offenporigen oder geschlossen porigen Schaum und/oder einen Wabenkern (35) mit längs oder quer zu den Decklagen (31, 32) verlaufende Waben aufweist, wobei die Kernlage (33) vorzugsweise aus nicht oder nur schwer entflammbaren Materialien besteht.

9. Mikroskop (1) oder Verwendung nach einem der vorhergehenden Ansprüche, **dadurch gekennzeichnet, dass** das Gehäusepaneel (23-25) eine freie Öffnung (22) eines Rahmens (17) verschließt, der vorzugsweise miteinander verschraubte oder vernietete Leichtmetallprofilstreben (21) aufweist.

10. Mikroskop (1) oder Verwendung nach Anspruch 9, **dadurch gekennzeichnet, dass** eine Länge der freien Öffnung (22) zwischen 10 cm und 100 cm, vorzugsweise zwischen 20 cm und 70 cm beträgt und eine Breite der freien Öffnung (22) zwischen 5 cm und 60 cm, vorzugsweise zwischen 10 cm und 45 cm beträgt.

11. Mikroskop (1) oder Verwendung nach Anspruch 9 oder 10, **dadurch gekennzeichnet, dass** das Gehäusepaneel (23-25) lösbar an dem Rahmen (17) befestigt, vorzugsweise in den Rahmen (17) eingeschoben und/oder mit dem Rahmen (17) verschraubt ist, wobei dem Gehäusepaneel (23-25) optional ein Lagesensor zugeordnet ist, der nur dann ein Sicherheitssignal ausgibt, wenn das Gehäusepaneel (23-25) eine freie Öffnung (22) eines Rahmens (17) verschließt.

12. Mikroskop (1) oder Verwendung nach einem der Ansprüche 9 bis 11, **dadurch gekennzeichnet, dass** neben dem Gehäusepaneel (23-25) mindestens zwei, vorzugsweise mindestens vier weitere gleichartige Gehäusepaneele (23-25) an dem Rahmen befestigt sind.

13. Mikroskop (1) oder Verwendung nach einem der Ansprüche 9 bis 12, **dadurch gekennzeichnet, dass** das Gehäuse (9) an dem Träger (2) abgestützt ist oder wird, wobei vorzugsweise der Rahmen an dem Träger (2) montiert ist oder wird.

14. Mikroskop (1) oder Verwendung nach einem der vorhergehenden Ansprüche, **dadurch gekennzeichnet, dass** die an dem Träger (2) montierten und von dem Gehäuse (9) abgedeckten optischen Elemente mehrere optische Elemente aus der folgenden Gruppe umfassen:
- Strahlteiler,
- Strahlscanner,
- Linsen,
- Linsengruppen,
- Phasenplatten,
- wellenlängenselektive Filter,
- SLM,
- AOM,
- Vollspiegel,
- dichroitische Spiegel,
- deformierbare Spiegel,
- CMOS- und CCD-Kameras.

15. Mikroskop (1) oder Verwendung nach einem der vorhergehenden Ansprüche, **dadurch gekennzeichnet, dass** das hochauflösende Mikroskop (1)
- ein Laserscanningmikroskop,
- ein konfokales Mikroskop,
- ein STED-Mikroskop,
- ein MINFLUX-Mikroskop oder
- ein Lokalisationsmikroskop
ist.
